# EUROPÄISCHE PATENTSCHRIFT

(11) **EP 1 871 517 B1**
(45) Veröffentlichungstag und Bekanntmachung des Hinweises auf die Patenterteilung: **28.07.2010**
(21) Anmeldenummer: 06742287.3
(22) Anmeldetag: 21.04.2006
(51) Int. Cl.: B01J 2/12

(54) **TROMMEL ZUM BESCHICHTEN VON KÖRNIGEN SUBSTRATEN**
DRUM FOR COATING GRAINED SUBSTRATES
TAMBOUR POUR ENDUIRE DES SUBSTRATS GRANULEUX

(30) Priorität: 21.04.2005 DE 102005019443
(43) Veröffentlichungstag der Anmeldung: 02.01.2008
(73) Patentinhaber: Glatt Maschinen- und Apparatebau AG, 4133 Pratteln (CH)
(72) Erfinder: NOWAK, Reinhard, 79589 Binzen (DE); ZERRER, Norbert, 79650 Schopfheim (DE); BOOS, Günther, 79713 Bad Säckingen (DE)
(74) Vertreter: Pätzelt, Peter
(86) Internationale Anmeldenummer: PCT/DE2006/000744
(87) Internationale Veröffentlichungsnummer: WO 2006/111162

(56) Entgegenhaltungen:
- EP-A- 0 648 529
- EP-A- 0 880 994
- US-A- 3 398 458
- US-A- 5 100 683
- US-B1- 6 770 298

## Beschreibung

### Technisches Gebiet

Die Erfindung betrifft eine Trommel zum Beschichten oder Trocknen von körnigen Substraten. Derartige Trommeln sind in der Praxis auch als Trommelcoater bekannt und werden u.a. in der pharmazeutischen Industrie zur Herstellung, d.h. zum Beschichten oder Trocknen, von pharmazeutischen Substraten in Pillen- oder Tablettenform eingesetzt. In entsprechender Weise kann auch eine Vielzahl von Substraten für industrielle Zwecke und in der Lebensmittelindustrie unter Verwendung von Trommelcoatern hergestellt werden.

Die Trommeln rotieren um eine horizontale oder leicht geneigte Achse und weisen zumindest teilweise Gasdurchlässe im Mantel der Trommel auf. Durch die Gasdurchlässe kann, vorzugsweise im Bereich des umwälzenden Substrates, ein Trocknungsgas von außen nach innen oder umgekehrt durch das Substrat hindurch geleitet werden, damit Feuchtigkeit von der Oberfläche der einzelnen Elemente des Substrates abgeleitet wird. Die Gasdurchlässe werden in der Praxis durch Siebe oder Lochungen ausgebildet, wobei die Größe der Lochungen entsprechend der Größe des Substrates ausgewählt wird, d.h. der einzelne Gasdurchlass ist kleiner als das kleinste Einzelelement des umwälzenden Substrates.

### Stand der Technik

Nach dem Stand der Technik weisen die Trommeln mindestens einen gasdurchlässigen Bereich auf, der sich allgemein in einem zentralen zylindrischen Abschnitt der Trommel befindet. Eine Seite der Trommel ist meist konusförmig geschlossen, während die andere Seite in der Form eines Kegelstumpfes ausgebildet ist. Dabei ist die kleinere Kreisfläche des Kegelstumpfes offen, so dass die Trommel durch diese Öffnung hindurch befüllt oder entleert werden kann.

Z.B. beschreibt die EP 0 362 888 B1 eine Vorrichtung zur Beschichtung von pulvrigen oder körnigen Stoffen, die eine um eine horizontale Achse drehbare Trommel aufweist. Ein Gas kann sowohl von innen nach außen als auch von außen nach innen durch einen zentralen, zylinderförmigen Hauptkörper geleitet werden, wozu die überwiegende Mantelfläche des Hauptkörpers eine Lochung aufweist.

Die Lochung wird in der Praxis allgemein durch Stanzen oder Bohren hergestellt, wodurch in der Wandung der Trommel kleine zylindrische Löcher entstehen, die zur Oberfläche des Trommelmantels hin sehr scharfe Kanten aufweisen. Bei empfindlichen Substraten müssen die Kanten durch einen gesonderten Schleifvorgang abgerundet werden. Dennoch bleibt die Vielzahl der Kanten an der Lochung bestehen und die Substrate kommen während des Umwälzprozesses mit dieser Vielzahl der Kanten mindestens teilweise in Berührung. Das kann, insbesondere bei empfindlichen Substraten, z.B. mit einer noch weichen Beschichtung, leicht zu Beschädigungen der Substratoberfläche führen.

Aus der DD 122 106 ist eine Galvanisiertrommel bekannt, dessen Mantel aus einer Vielzahl von Rund- oder Rohrstabelementen besteht, die parallel zur Rotationsachse in Durchbrüchen von zwei gegenüberliegenden Begrenzungsplatten gelagert sind. Dabei weisen die Begrenzungsplatten für Beschichtungs- und Trocknungsprozesse außerordentlich störende Kanten auf, die das Substrat beschädigen können.

Das Dokument US 6770298 veröffentlicht eine Trommel zum Beschichten oder Trocknen von körnigen Substraten, die in einer horizontalen oder leicht geneigten Achse drehbar gelagert ist und zumindest teilweise im Trommelmantel und im Bereich des um die Achse umwälzenden Substrates Gasdurchlässe aufweist. Als Gasdurchlässe im Trommelmantel sind Schlitze vorhanden, die zwischen zueinander parallel angeordneten Stegen ausgebildet sind.

Insbesondere in der pharmazeutischen Industrie ist es erforderlich, die Vorrichtungen oder Teile von Vorrichtungen, die mit dem Substrat in Berührung kommen, regelmäßig oder periodisch einer gründlichen Reinigung zu unterziehen. Dazu gehören auch die teilweise sehr kleinen zylinderförmigen Löcher der Lochung im Trommelmantel. Bereits geringe Rauigkeiten der Lochwandungen können zu erheblichen Problemen führen. In gleicher Weise können auch alle Einbauten in den Trommeln, wie die Begrenzungsplatten zur Lagerung der Rund- oder Rohrstabelementen, nur mit großem Aufwand gereinigt werden.

### Darstellung der Erfindung

Der Erfindung liegt damit als Aufgabe zugrunde, eine Trommel zum Beschichten oder Trocknen von körnigen Substraten anzugeben, bei der das Substrat während der Behandlung wirksam und schonend umgewälzt wird und die leicht gereinigt werden kann.

Die Erfindung löst die Aufgabe durch die im Anspruch 1 angegebenen Merkmale. Vorteilhafte Weiterbildungen der Erfindung sind in den Unteransprüchen gekennzeichnet und werden nachstehend zusammen mit der Beschreibung der bevorzugten Ausführung der Erfindung, einschließlich der Zeichnung, näher dargestellt.

Mit der Erfindung werden die insbesondere in der pharmazeutischen Industrie nachteiligen Kanten an der großen Vielzahl von Lochungen in der Trommelwand und an Einbauten nach dem Stand der Technik überwunden und durch relativ wenige Schlitze zwischen parallel angeordneten Stegen ersetzt. Die Stege weisen keine wesentlichen Kanten auf oder es sind, z.B. bei Rundstäben, keine Kanten vorhanden. Von den parallelen Stegen ist mindestens ein Teil gegenüber der Achse der Trommel und der Horizontalen geneigt angeordnet, derart dass mindestens im Bereich der Entnahmeöffnung die körnigen Substrate während der Behandlung, d.h. während der Rotation der Trommel, innerhalb der Vertiefungen zwischen jeweils zwei Stegen durch die Schwerkraft von der Entnahmeöffnung weg bewegt werden.

Die einzelnen Elemente des umwälzenden Substrates rutschen oder rollen nur auf den Rundungen der Stege entlang, ohne mit einer Kante in Berührung zu kommen. In vorteilhafter Weise ist dadurch die Auflage der Substrate auf den Stegen auf einen Punkt oder eine Linie beschränkt. Die Umwälzung erfolgt ausgesprochen schonend mit der Folge eines sehr geringen Abriebs.

Die erfindungsgemäß gegenüber der Achse der Trommel und der Horizontalen geneigt angeordneten Stege, führen dazu, dass das umwälzende Substrat in den ausgeprägten Vertiefungen zwischen den einzelnen Stegen, durch die zwangsweise auf das umwälzende Substrat einwirkende Schwerkraft, entsprechend der Richtung der Vertiefungen seitlich nach unten bewegt wird. Mit Bezug auf das erfindungsgemäße Merkmal, wonach die Stege auch gegen die Horizontale geneigt sind, ist es auch möglich die Achse der Trommel gegenüber der Horizontalen zu neigen. Auch dann wird das umwälzende Substrat durch die Schwerkraft, entsprechend der Richtung der Vertiefungen seitlich nach unten bewegt.

Wenn entsprechend Anspruch 2 ein Teil der Stege in die eine Richtung und ein anderer gleich großer Teil in die andere Richtung zur Achse der Trommel geneigt sind, kommt es zu einer sehr vorteilhaften axialen Umwälzung des Substrates zur Trommelmitte oder von der Trommelmitte weg, die die grundsätzliche tangentiale Umwälzung des Substrates überlagert. Diese Ausbildung der Trommel führt zu einer besonders wirksamen und schonenden Umwälzung der Substrate.

Erfindungsgemäß hat die Wand der Trommel keinerlei Löcher oder andere schwer zugängliche Engstellen, wodurch die gesamte Trommel, einschließlich der Schlitze, problemlos gereinigt werden kann.

Die geometrische Form des Querschnitts der Stege ist nicht bestimmt, sondern kann frei gewählt werden. Vorteilhaft ist ein einfacher runder Querschnitt. Zur Erhöhung der Stabilität der gesamten Trommel können die Stege in radialer Richtung auch eine größere Ausdehnung aufweisen, z.B. einen ovalen Querschnitt oder einen Querschnitt mit einer flachen Wölbung zur Achse der Trommel und einer starken äußeren Wölbung.

Nach Anspruch 4 können die Stege in ihrer Längsausdehnung auch sinus- oder andersartig, z.B. in der Art eines Mäanders geformt ausgebildet sein. Dabei ist der rechtwinklige Abstand zwischen zwei Stegen jeweils gleich groß.

Die erfindungsgemäße Anordnung der Stege kann auch entsprechend Anspruch 7 mit der spezifischen Ausbildung der Trommel kombiniert werden. Der Trommelmantel weist dabei mindestens im Bereich, in dem die Stege angeordnet sind, die geometrische Form eines Kegelstumpfes auf. Dabei wird das umwälzende Substrat durch die Schwerkraft in den Vertiefungen zwischen den Stegen in eine axiale Richtung bewegt und in entsprechender Weise innerhalb des Kegelmantels in die gleiche oder in die entgegengesetzte andere axiale Richtung. Eine entsprechende Wirkung kann auch durch die Schrägstellung der Trommelachse erreicht werden.

Bei derartigen Ausbildungen der Trommel können die nach dem Stand der Technik meist erforderlichen das Substrat zwangsweise umwälzenden Schaufeln, Leitbleche u.ä. Einrichtungen innerhalb der Trommel entfallen. Das führt in der Folge zur weiteren Minderung von Belastungen des umwälzenden Substrates durch Kanten, die schädigend auf die einzelnen Elemente des Substrates einwirken können.

Die Stege können innerhalb des Trommelmantels mittels beliebiger technischer Verfahren hergestellt werden. Die Stege können in der Form von selbständigen Halbzeugen mit blechartigen Halbzeugen, z.B. durch Schweißung, zu einem erfindungsgemäßen Trommelmantel zusammengefügt sein. Die Stege können aber auch durch ein materialabtragendes Verfahren in ein blechartiges Halbzeug eingearbeitet sein.

Insbesondere bei größeren Trommeln kann es zur Sicherung einer ausreichenden Stabilität erforderlich sein, zwischen einzelnen Bereichen von Gasdurchlässen statische Verstärkungselemente vorzusehen. Das können massive geschlossene ringförmige Abschnitte im Trommelmantel, konkrete Verstärkungselemente oder auch außen auf den Trommelmantel aufgebrachte, den Bereich der Stege überdeckende flächige Stabilisierungen, z.B. ein Siebgewebe, sein.

Die schräge Anordnung der Stege gegenüber der Achse der Trommel und der Einsatz einer Trommel mit der geometrischen Form eines Kegelstumpfes oder einer Schrägstellung der Rotationsachse der Trommel kann in vorteilhafter Weise auch zur Ausschleusung des fertigen Substrates aus der Trommel genutzt werden. Wenn die Trommel derart rotiert, dass die Wirkung der schräg angeordneten Stege und die des kegelförmigen Mantels bzw. der Schrägstellung der Trommel sich aufheben, wird das Substrat in vorteilhafter Weise axial umgewälzt, ohne dass das Substrat in der Gesamtheit seine axiale Lage ändert. Wird die Drehrichtung der Trommel jedoch geändert, so dass sich die Wirkung der schräg angeordneten Stege und die des kegelförmigen Mantels bzw. der Schrägstellung der Trommel ergänzen, wird das umwälzende Substrat nur in eine Richtung bewegt, in der eine Auslassöffnung vorgesehen werden kann.

Die Erfindung wird nachstehend an einem Ausführungsbeispiel näher erläutert. Zugehörig zeigt Figur 1 eine schematische Seitenansicht. Die Figuren 2 und 3 zeigen Einzelheiten der erfindungsgemäßen Trommel.

### Ausführungsbeispiel

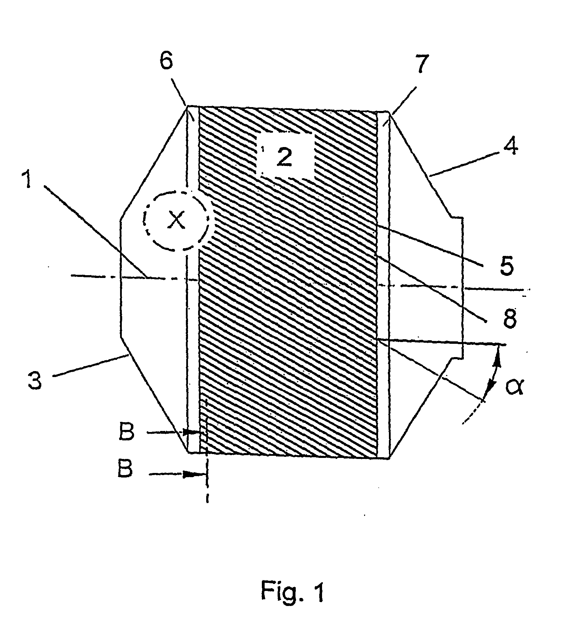

Figur 1 zeigt eine schematische Seitenansicht einer erfindungsgemäßen Trommel, die im Betrieb um eine Achse 1 rotiert. Die Trommel besteht im Wesentlichen aus einem Trommelmantel 2, einem geschlossenen konischen Boden 3 und einem zentrisch offenen konischen Beschickungsabschnitt 4. Der Trommelmantel 2 ist zylindrisch ausgebildet und weist Stege 8 auf, zwischen denen Schlitze 5 als Gasdurchlässe ausgebildet sind. Die Schlitze 5 sind in der horizontalen Ebene zur Achse 1 um einen Winkel α von 45° geneigt und derart mit einem Plasmaschneid-Verfahren in ein zylindrisches Trommelblech eingeschnitten, dass im Trommelmantel 2 beidseitige zylindrische Bunde 6 und 7 ausgebildet sind. Bei der Herstellung wurden die Parameter des Plasmastrahles so eingestellt, dass die Stege 8 gut gebrochene Kanten aufweisen.

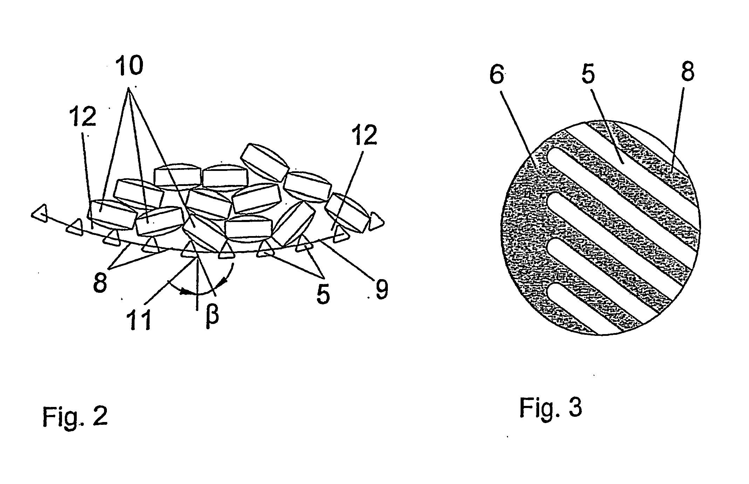

Der Querschnitt der Stege 8 ist in Figur 2, dem Schnitt B-B in Figur 1, sowie Figur 3, der Einzelheit X in Figur 1, vergrößert dargestellt. Im Beispiel wurde der Plasmastrahl mit einem Winkel β von 10°um den Punkt 11 auf einer Kreislinie 9 des zylindrischen Trommelmantels 2 geschwenkt. In der Folge weisen die Stege 8 den Querschnitt eines Dreieckes mit gut gerundeten Kanten auf.

Die Lage der zur Achse 1 um 45° geneigten Schlitze 5 führen zu schrägen linearen Vertiefungen 12 in denen die Substrate 10, bei Drehung der Trommel, durch die Schwerkraft in der fallenden Richtung der Vertiefungen 12 nach unten bewegt werden. In der Praxis kann der Trommelmantel auch gleichgroße Bereiche mit entgegengesetzt ausgerichteten Schlitzen aufweisen. Dadurch werden die Substrate, zusätzlich zur radial tangentialen Umwälzung durch die Rotation der Trommel, auch gleichmäßig in axialer Richtung umgewälzt.

## Patentansprüche

1. Trommel zum Beschichten oder Trocknen von körnigen Substraten (10), die in einer horizontalen oder leicht geneigten Achse (1) drehbar gelagert ist und zumindest teilweise im Trommelmantel (2) und im Bereich des um die Achse (1) umwälzenden Substrates (10) Gasdurchlässe aufweist, **dadurch gekennzeichnet, dass** als Gasdurchlässe im Trommelmantel (2) Schlitze (5) vorhanden sind, die zwischen zueinander parallel angeordneten Stegen (8) ausgebildet sind, wobei mindestens ein Teil der Stege (8) gegenüber der Achse (1) und der Horizontalen geneigt angeordnet ist, derart dass die körnigen Substrate (10) während der Drehung der Trommel innerhalb der Vertiefungen (12) zwischen jeweils zwei Stegen (8) durch die Schwerkraft seitlich bewegt werden.

2. Trommel nach Anspruch 1, **dadurch gekennzeichnet, dass** ein Teil der Stege gegenüber der Trommelachse in einer Richtung und mindestens ein weiterer Teil der Stege in der entgegengesetzten Richtung geneigt angeordnet sind.

3. Trommel nach Anspruch 1 oder 2, **dadurch gekennzeichnet, dass** die Stege (8) im Querschnitt geometrisch beliebig geformt sind und dass der größte Abstand zwischen den aneinander liegenden Stegen (8) kleiner ist als das kleinste einzelne Element des umwälzenden Substrates (10).

4. Trommel nach einem der Ansprüche 1 bis 3, **dadurch gekennzeichnet, dass** die Stege in der Längsrichtung von der Geraden abweichend, insbesondere sinus- oder andersartig geformt ausgebildet sind.

5. Trommel nach einem der Ansprüche 1 bis 4, **dadurch gekennzeichnet, dass** die Stege (8) durch ein materialabtragendes Verfahren im Trommelmantel (2) eingearbeitet sind.

6. Trommel nach einem der Ansprüche 1 bis 5, **dadurch gekennzeichnet, dass** im Trommelmantel mehrere voneinander getrennte Bereiche von Gasdurchlässen vorhanden sind, wobei zwischen den einzelnen Bereichen statische Elemente zur Verstärkung der Trommel vorgesehen sein können.

7. Trommel nach einem der Ansprüche 1 bis 6, **dadurch gekennzeichnet, dass** der Trommelmantel mindestens im Bereich, in dem die Stege angeordnet sind, bei horizontaler Achse die geometrische Form eines Kegelstumpfes aufweist oder dass die Achse gegenüber der Horizontalen geneigt ist.

## Claims

1. Drum for coating or drying grained substrates (10), which is mounted rotatably in a horizontal or slightly inclined axis (1) and has, at least partially, gas passages in the drum casing (2) and in the region of the substrate (10) circulating about the axis (1), **characterized in that** slots (5) that are formed between mutually parallel ridges (8) are present in the drum casing (2) as gas passages, at least some of the ridges (8) being inclined with respect to the axis (1) and the horizontal in such a way that, during the rotation of the drum, the gravitational force causes the grained substrates (10) to be moved laterally within the depressions (12) respectively between two ridges (8).

2. Drum according to Claim 1, **characterized in that** some of the ridges are inclined with respect to the drum axis in one direction and at least some of the other ridges are inclined in the opposite direction.

3. Drum according to Claim 1 or 2, **characterized in that** the ridges (8) are geometrically shaped in any way desired in cross section and **in that** the greatest distance between the adjacent ridges (8) is less than the smallest individual element of the circulating substrate (10).

4. Drum according to one of Claims 1 to 3, **characterized in that** the ridges are formed in the longitudinal direction in a manner other than rectilinear, in particular are shaped in a sinusoidal or other manner.

5. Drum according to one of Claims 1 to 4, **characterized in that** the ridges (8) are machined in the drum casing (2) by a material-removing method.

6. Drum according to one of Claims 1 to 5, **characterized in that** in the drum casing there are a number of mutually separate regions of gas passages, it being possible for static elements for reinforcing the drum to be provided between the individual regions.

7. Drum according to one of Claims 1 to 6, **characterized in that**, with a horizontal axis, the drum casing has, at least in the region in which the ridges are arranged, the geometric form of a frustum of a cone or **in that** the axis is inclined with respect to the horizontal.

## Revendications

1. Tambour destiné à revêtir ou sécher des substrats granuleux (10), monté à rotation dans un axe (1) horizontal ou légèrement incliné et présentant des passages de gaz au moins dans une partie de l'enveloppe (2) du tambour et dans la zone occupée par le substrat (10) qui tourne autour de l'axe (1),
**caractérisé en ce que**
des fentes (5) formées entre des traverses (8) disposées parallèlement les unes aux autres sont prévues comme passages de gaz dans l'enveloppe (2) du tambour,
**en ce qu'**au moins une partie des traverses (8) est disposée obliquement par rapport à l'axe (1) et à l'horizontale de telle sorte que le substrat granuleux (10) soit déplacé latéralement par gravité à l'intérieur des creux (12) situés entre deux traverses (8) pendant la rotation du tambour.

2. Tambour selon la revendication 1, **caractérisé en ce qu'**une partie des traverses est inclinée dans une direction par rapport à l'axe du tambour et au moins une autre partie des traverses est inclinée dans la direction opposée.

3. Tambour selon les revendications 1 ou 2, **caractérisé en ce que** les traverses (8) ont une forme géométrique quelconque en section transversale et **en ce que** la plus grande distance entre les traverses (8) adjacentes est inférieure au plus petit élément distinct du substrat (10) mis en rotation.

4. Tambour selon l'une des revendications 1 à 3, **caractérisé en ce que** dans le sens de leur longueur, les traverses ont une forme différente de la ligne droite et ont en particulier une forme sinusoïdale ou autre.

5. Tambour selon l'une des revendications 1 à 4, **caractérisé en ce que** les traverses (8) sont formées dans l'enveloppe (2) du tambour par une opération d'enlèvement de matière.

6. Tambour selon l'une des revendications 1 à 5, **caractérisé en ce que** plusieurs parties de passages de gaz séparées les unes des autres sont prévues dans l'enveloppe du tambour, des éléments statiques de renforcement du tambour pouvant être prévus entre ses différentes parties.

7. Tambour selon l'une des revendications 1 à 6, **caractérisé en ce que** lorsque l'axe est horizontal, l'enveloppe du tambour présente la forme géométrique d'un tronc de cône au moins dans la partie dans laquelle les traverses sont disposées, ou **en ce que** l'axe est incliné par rapport à l'horizontale.
